# EUROPEAN PATENT APPLICATION

(11) **EP 1 662 815 A1**
(43) Date of publication of application: **31.05.2006**
(21) Application number: 04292802.8
(22) Date of filing: 26.11.2004
(51) Int. Cl.: H04Q 7/22

(54) **Enhanced SMS handling in CDMA based networks**

(71) Applicant: ALCATEL, 75008 Paris (FR)
(72) Inventor: Allerborn, Wilhelm, 71254 Ditzingen (DE); Egler, Wolfgang, 70734 Fellbach (DE)
(74) Representative: Kohler Schmid Möbus

(57) **Abstract**

Method of handling short messages (SMS) in a communications network comprising a CDMA based network, comprising the steps of:
a. a short message (SMS) originating from a user equipment (2) is detected by a first short message detection point (SDP1) of a Mobile Switching Node (MSN);
b. upon detection of the short message (SMS) control information of said short message (SMS) and/or at least part of the content of said short message (SMS) is transferred to a short message handling device (SHD),
c. the short message handling device (SHD) performs and/or initiates at least one specific service,
   and/or
d. a short message (SMS) terminating at a user equipment is detected by a third short message detection point (SDP3) of a Mobile Switching Node (MSN);
e. upon detection of the terminating short message (SMS) control information of said terminating short message and/or at least part of the content of said terminating short message is transferred to a short message handling device (SHD),
f. the short message handling device (SHD) performs and/or initiates at least one specific service.

Thus, p.ex. prepaid services for SMS in a CDMA network become available.

## Description

### Background of the invention

The invention relates to a method and a system for handling short messages (SMS) in a communications network comprising a code division multiple access (CDMA) based network.

Up to now no enhanced services for SMS handling in CDMA based systems, in particular in CDMA based mobile switching centers (MSCs), are available. In order to be able to allow enhanced SMS services in a CDMA based network the MSC must be modified and the control of the services must be separated from the control of the connection establishment.

### Object of the invention

It is therefore an object of the present invention to provide a method and a system for enabling enhanced SMS handling in CDMA based networks.

### Short description of the invention

The object is solved according to the invention by a method comprising the steps of
a) An SMS originating from a user equipment is detected by a first short message detection point of a mobile switching node;
b) upon detection of the SMS control information of that SMS and/or at least part of the content of that SMS is transferred to an SMS handling device;
c) the SMS handling device performs and/or initiates at least one specific service.
   and/or
d) a short message terminating at a user equipment is detected by a third message detection point of a mobile switching node;
e) upon detection of the terminating short message, control information of said terminating short message and/or at least part of the content of said terminating short message is transferred to a short message handling device,
f) the short message handling device performs and/or initiates at least one specific service.

By providing an SMS handling device the control of the services may be separated from the control of the connection establishment. In particular, the SMS handling device takes over the task of controlling the services associated with the short message. The mobile switching node may be an MSC or a Serving GPRS Support Node (SGSN), meaning that the method is fully applicable to packet domain based SMS handling procedures. Upon detection of the short message, i.e. upon triggering of the first detection point, new SMS handling procedures, preferably WIN procedures, are initiated in order to forward the short message to the short message handling device or to interrogate the short message handling device for further handling of the received short message. For example, upon triggering of the first short message detection point, the SMS processing software in the MSC stops the further SMS handling and interrogates the SMS handling device for further handling. This means, that for example a procedure "SMS - detected" is started. Parameters such as a short message service center (SMSC) address, the SMS contents, the calling party number or the called party number are transferred to the short message handling device. Using this information, the SMS handling device can now instruct the MSC to apply specific services. Specific services may be rerouting, barring (blocking), screening (filtering), interception, modification or charging. Since the short message handling device and the short message service center may be located in different countries, it is important that the short messages are first handled by the short message handling device before they are transmitted to the destination subscriber. If WIN procedures are being used, advantageously a specific WIN subscription is used in the subscriber profile.

One of the main advantages of the invention is that the inventive method allows a prepaid service for SMS. For example, the SMS handling device reduces the prepaid credit each time an SMS of a particular user is detected. Furthermore, a procedure "SMS-detected" may be used for programming services via an SMS, for example to program new call forwarding numbers or to control devices via SMS. For example, a user may send an SMS in order to turn on the heating in his house when he is on his way back home.

Upon triggering of the third short message detection point, i.e., a short message received by the short message handling device coming from an SMSC, the short message processing software stops a further short message handling and interrogates the short message handling device for further handling of the short message. This may be done by starting a procedure called "SMS-received". According to this procedure, the SMSC address, the SMS contents, the calling party number and the called party number are sent to the short message handling device. The short message handling device can now instruct the mobile switching node which services are now to be applied. This could be rerouting, barring, screening (filtering), interception, modification, charging, etc. This also allows the prepaid service for short messages, e.g. the short message handling device deducts the prepaid credit each time an SMS is delivered. This is applicable, if for example, an SMS is sent in a first country, and the SMS is delivered in a second country, and delivering of the SMS in the second country is subject to a fee.

In a preferred variant of the method the SMS handling device instructs the mobile services switching node according to the at least one specific service as to how to process the short message. For example, the SMS may be barred or rerouted.

In another variant of the method the short message handling device sends control information modified according to the specific service and/or modified contents of a short message to the mobile switching node for further treatment. This may be done by a procedure called "SMS-detected-response". The short message handling device may send new parameters such as new SMS contents, new calling party number, new called party number, new SMSC address, and reason for barring to the mobile switching node, which may then be passed on together with the SMS as control information.

Advantageously, a notification about the short message being delivered successfully or unsuccessfully is sent to the mobile switching node where the notification is received by at least one second short message detection point. If the short message was delivered, the mobile switching node gets a notification from the SMSC. This notification should trigger a second short message detection point. This short message detection point may be divided into two short message detection points, one detection point for successful delivery of a short message and one for the unsuccessful delivery of a short message. For example, if a short message is not successfully delivered, the prepaid account has to be corrected. Nothing may be deducted from the prepaid account, if it was not possible to deliver a short message. The information, whether a short message was delivered successfully or if the short message could not be delivered is also transferred by the mobile switching node to the short message handling device. This is necessary, if, for example, the short message handling device is responsible for managing the prepaid account.

According to a preferred variant of the method the short message handling device instructs the mobile switching node according to the at least one specific service as to how to process the terminating short message.

After the short message handling device has been interrogated, a procedure called "SMS-received-response" may be started. This means, that the short message handling device sends parameters to the mobile switching node such as new SMS contents, new calling party number, new called party number, new SMSC address, reason for barring.

In a preferred further variant of the method an acknowledgement is sent to the mobile switching node if the terminating short message is delivered successfully. If the short message was delivered, the mobile switching node gets an acknowledgement from the user equipment, i.e. a mobile station. This acknowledgement should trigger a fourth short message detection point of the mobile switching node. The fourth short message detection point may actually be divided into two points, one for the detection of successful and one for the detection of unsuccessful delivery of the short message. The short message handling device is also informed about the successful or unsuccessful delivery of the short message.

Within the scope of the invention falls also a short message handling device communicating via an interface with the mobile switching node and adapted to receive control information relating to a short message and/or contents of a short message and to perform and/or initiate a specific service related to a short message. Such a short message handling device enlarges the possibilities of a CDMA based network. In particular, enhanced SMS handling becomes possible in a CDMA based network.

The invention also relates to a system for handling short messages comprising a CDMA network, at least one user equipment designed to be able to send short messages, at least one mobile switching node which comprises a first short message detection point and a second short message detection point, and which communicates with the short message handling device via an interface. The communication between the user equipment and the mobile switching node occurs preferably via the CDMA standard. The communication between the mobile switching node and the short message handling device, which may be a service control point, occurs preferably via the WIN standard.

Additionally or alternatively, the system having at least one user equipment, a CDMA network, and a mobile switching node may comprise a short message service center communicating with a third short message detection point of the mobile switching node, wherein the mobile switching node preferably comprises a fourth short message detection point. The detection points are preferably pieces of software, which can receive short messages or information about short messages and then start procedures dealing with control of the short messages or the short messages themselves.

The invention also relates to a control software for downloading via SMS from a server to the user equipment enabling the user of the user equipment to participate in enhanced SMS services in a CDMA network.

Summarizing, the invention has the following advantages:
- For user equipment originating short messages, this invention allows the short message handling device
   o to perform charging activities on the user equipment originating short messages, e.g. for prepaid subscribers.
   o to modify the SMSC address to send the SMS to a specialized SMSC, having a special functionality.
   o to request rerouting of the SMS to another subscriber, i.e. change the destination address of the SMS.
   o to bar or block a short message, for example, if no credit is available for a prepaid subscriber.
   o to bar a short message to certain destinations of the SMSC.
   o to allow transmission of the SMS as requested by the originator.
- For user equipment terminating short messages this invention allows the short message handling device
   o to perform charging activities on the terminating short message, e.g. for prepaid subscribers;
   o to bar or block short messages from certain originations;
   o to change parameters of the short message like, e.g. the origination address;
   o allow delivery of the unchanged short message.

This enumeration is by no means complete. Further possibilities and advantages may arise with the inventive method and system.

Further advantages can be extracted from the description and the enclosed drawings. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawings.
- **Fig. 1**: shows the handling of a short message originating from a mobile terminal.
- **Fig. 2**: shows the handling of a short message terminating at a mobile terminal.

**Fig: 1** shows a system 1 for handling short messages SMS. The system 1 comprises a user equipment 2 embodied as a mobile terminal, in particular a mobile phone. A user may use the user equipment 2 in order to send a short message SMS. The short message SMS is received by a mobile switching node MSN. The mobile switching node MSN may be embodied as MSC or SGSN. In the mobile switching node MSN the short message SMS is detected by a first short message detection point SDP1. From there, control information about the short message SMS or parts of or the whole content of the short message SMS is sent via an interface 3, which may be a WIN interface, to a short message handling device SHD. This means that upon triggering of the first short message detection point SDP1 SMS handling procedures, preferably WIN procedures, are started in order to forward the short message SMS to the short message handling device SHD or to inform the short message handling device SHD about the existence of the short message SMS and to interrogate the short message handling device SHD for instructions about the further handling of the received short message SMS by sending parameters related to the SMS to the short message handling device SHD. If the short message handling device SHD decides that the short message is to be passed on or rerouted, the short message is sent by the mobile switching node MSN to a short message service center SMSC, from where it is delivered to the called party.

The mobile switching node MSN further comprises a second short message detection point SDP2 which receives a notification about the short message SMS being delivered successfully or unsuccessfully. This information is also passed on via the interface protocol 3 to the short message handling device SHD, for example by starting a procedure "SMS successful" or "SMS unsuccessful". Those procedures could send additional information as parameters to the short message handling device. Eventually, for example initiated by the short message handling device, the sender of the short message SMS may be informed about the successful or unsuccessful delivery of the short message SMS. The short message handling device SHD also decides and instructs the mobile switching node MSN about the actions to be taken if a short message could not be delivered successfully.

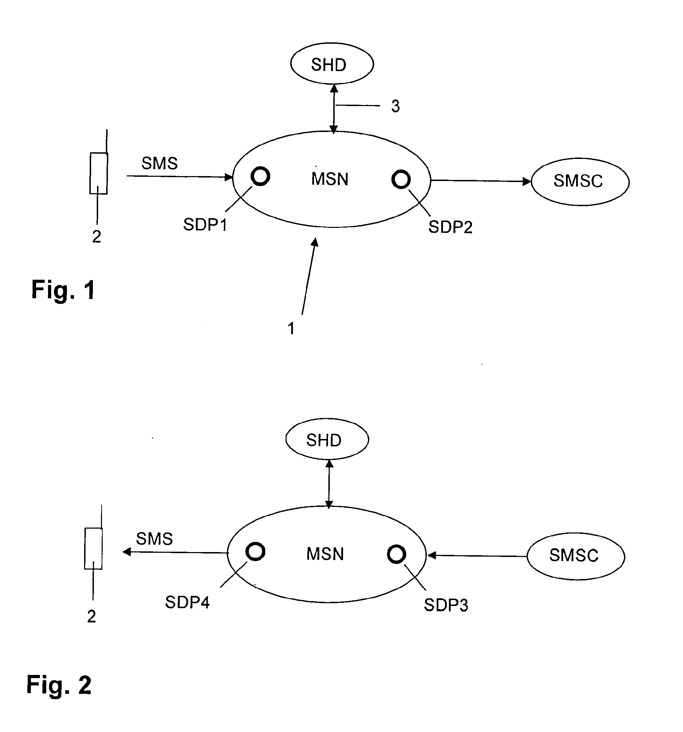

**Fig. 2** shows another part of the system 1 and shows the case for a terminating short message based procedure. The mobile switching node MSN comprises a third short message detection point SDP3. The third short message detection point SDP3 is triggered by receiving a short message SMS from the SMSC. If this happens, the short message processing software stops the further short message handling and informs the short message handling device SHD about receiving the short message and interrogates the short message handling device SHD by sending control information and/or the contents of the received short message SMS to the short message handling device SHD. The short message handling device SHD initiates or performs a specific service and tells the mobile switching node how to process the received short message SMS. If the short message handling device SHD decides that the short message SMS, possibly in modified form, is to be passed on, the short message SMS is delivered to the user equipment 2. If the short message SMS was delivered to the user equipment 2 successfully, the fourth short message detection point SDP 4 receives an acknowledgement which is passed on to the short message handling device SHD. The fourth short message detection point 4 also receives an acknowledgement, if the SMS was not delivered successfully. This information is also passed on via the interface protocol 3 to the short message handling device SHD, for example by starting a procedure "SMS successful" or "SMS unsuccessful". Those procedures could send additional information as parameters to the short message handling device.

## Claims

1. Method of handling short messages (SMS) in a communications network comprising a CDMA based network, comprising the steps of:
a) a short message (SMS) originating from a user equipment (2) is detected by a first short message detection point (SDP1) of a Mobile Switching Node (MSN);
b) upon detection of the short message (SMS) control information of said short message (SMS) and/or at least part of the content of said short message (SMS) is transferred to a short message handling device (SHD),
c) the short message handling device (SHD) performs and/or initiates at least one specific service;
and/or
d) a short message (SMS) terminating at a user equipment is detected by a third short message detection point (SDP3) of a Mobile Switching Node (MSN);
e) upon detection of the terminating short message (SMS) control information of said terminating short message and/or at least part of the content of said terminating short message is transferred to a short message handling device (SHD),
f) the short message handling device (SHD) performs and/or initiates at least one specific service.

2. Method according to claim 1, **characterized in that** the short message handling device (SHD) instructs the Mobile Switching Node (MSN) according to the at least one specific service as to how to process the short message (SMS).

3. Method according to claim 1, **characterized in that** the short message handling device (SHD) sends control information modified according to the specific service and/or modified contents of the short message (SMS) to the Mobile Switching Node (MSN) for further treatment.

4. Method according to claim 1, **characterized in that** a notification about the short message (SMS) being delivered successfully or unsuccessfully is sent to the Mobile Switching Node (MSN) where the notification is received by at least one second short message detection point (SDP2).

5. Method according to claim 1, **characterized in that** the short message handling device (SHD) instructs the Mobile Switching Node (MSN) according to the at least one specific service as to how to process the terminating short message (SMS).

6. Method according to claim 1, **characterized in that** an acknowledgement is sent to the Mobile Switching Node (MSN) if the terminating short message (SMS) was delivered successfully.

7. Short message handling device (SHD) communicating via an interface with a Mobile Switching Node (MSN) and adapted to receive control information relating to a short message (SMS) and/or contents of a short message (SMS) and to perform and/or initiate a specific service related to the short message (SMS).

8. System (1) for handling short messages (SMS) comprising a CDMA network, at least one user equipment (2) designed to be able to send short messages (SMS), at least one Mobile Switching Node (MSN), which comprises a first short message detection point (SDP1) and a second short message detection point (SDP2), and which communicates with a short message handling device (SHD) via an interface (3), and/or the system (1) comprises a CDMA network, at least one user equipment (2) designed to be able to receive short messages (SMS), at least one Mobile Switching Node (MSN), and a short message service center (SMSC) communicating with a third short message detection point (SDP3) of the Mobile Switching Node (MSN), wherein the Mobile Switching Node (MSN) comprises a fourth short message detection point (SDP4).

9. Control software for downloading via SMS from a server to a user equipment (2) enabling the user of the user equipment (2) to participate in enhanced SMS services in a CDMA network.
